# EUROPEAN PATENT SPECIFICATION

(11) **EP 4 008 990 B1**
(45) Date of publication and mention of the grant of the patent: **06.11.2024**
(21) Application number: 21211584.4
(22) Date of filing: 01.12.2021
(51) Int. Cl.: F41H 13/00, G02B 26/06, G02B 26/08

(54) **ADAPTIVE OPTICAL SYSTEM**
ADAPTIVES OPTSCHES SYSTEM
SYSTÈME D'OPTIQUE ADAPTIVE

(30) Priority: 01.12.2020 IT 202000029198
(43) Date of publication of application: 08.06.2022
(73) Proprietor: MBDA ITALIA S.p.A., 00131 Roma (IT)
(72) Inventor: BANCALLARI, LUCA, I- 00131 ROMA (IT); FIRPI, STEFANO, I- 00131 ROMA (IT)
(74) Representative: Carangelo, Pierluigi

(56) References cited:
- US-A1- 2011 103 410
- US-A1- 2014 085 740
- ROSS COLIN ET AL: "Next generation adaptive optics: a low-voltage ASIC driver for MEMS deformable mirrors", PROCEEDINGS OF SPIE; [PROCEEDINGS OF SPIE ISSN 0277-786X VOLUME 10524], SPIE, US, vol. 10703, 11 July 2018 (2018-07-11), pages 107034G - 107034G, XP060110203, ISBN: 978-1-5106-1533-5, DOI: 10.1117/12.2314256

## Description

### FIELD OF THE INVENTION

The present invention relates to the technical field of controllable optical systems for mitigating possible degradations of the performance thereof, for example due to atmospheric effects such as turbulence, or non-ideal situations in general. In particular, the present invention relates to an adaptive optical system. Such an adaptive optical system can be used in applications such as: power lasers, optical communications in free space, LIDAR, remote detecting systems.

### BACKGROUND ART

As is known, the atmosphere induces aberrations and phase errors in the optical radiations passing therethrough. For this reason, optical systems which adopt the propagation of optical radiation in the atmosphere generally require a recovery of the aberrations and phase errors induced by the propagation in the atmosphere.

To reduce or eliminate the aforesaid aberrations and the aforesaid phase errors, adaptive optical systems have been developed which generally comprise an optical device which is controllable for emitting and/or reflecting and/or transmitting an optical radiation having a wavefront, a wavefront distortion measurement of the optical radiation, a control system adapted to control the optical device in order to reduce or eliminate the measured distortion.

The use of adaptive optical systems is convenient or appropriate for several reasons: for example turbulence influences the propagation path of optical radiation in the air and this alters the phase relationships within a common path of light rays. When transmitting light through the atmosphere, phase alteration can distort the beam, blur it, or simply reduce light intensity due to mismatched phases. The result is the deformation of the optical path and this can cause various drawbacks, such as:
- reduction of the energy transport efficiency along a path. In a laser device, this requires an increase in the power of the optical source to compensate for the reduction in efficiency. However, the increase in power causes negative effects due for example to blooming and in any case it is not always possible to have adequately powerful sources;
- Reduction of the beam quality, which causes a reduction in the effective operating distance for electro-optical systems (e.g., viewers) or decreases the sensitivity of detection systems;
- Increased noise, which negatively affects false negatives or reduces the bandwidth in optical communication.

Currently there are several solutions but none of the known solutions is efficient enough to allow the miniaturization of an effective solution and, even if adaptive optics could be used, the size of the solution would not be compatible in many applications. For example, adaptive optics are used in telescopes but these systems are considerably cumbersome. Some known adaptive optical systems comprise linear analog amplifiers to implement a linear voltage control of the controllable optical device. This causes numerous drawbacks, since for example it requires relatively large dimensions and weight, limits the system bandwidth and requires relatively high costs. ROSS COLIN ET AL: "Next generation adaptive optics: a low-voltage ASIC driver for MEMS deformable mirrors", PROCEEDINGS OF SPIE; [PROCEEDINGS OF SPIE ISSN 0277-786X VOLUME 10524], SPIE, US discloses a low voltage ASIC driver for MEMS deformable mirrors that can be used in adaptive optical systems. US 2011/103410 A1 and US 2014/085740 A1 disclose prior art adaptive optical systems.

A general object of the present description is to provide an adaptive optical system which allows to remedy in whole, or at least in part, the problems described above with reference to the adaptive optical systems of the background art.

The aforesaid object, as well as other objects which will become clearer hereinafter, are achieved by an adaptive optical system as defined in claim 1. Preferred and advantageous embodiments of the aforesaid system are defined in the appended dependent claims.

The invention will be better understood from the following detailed description of particular embodiments thereof, given by way of non-limiting example, with reference to the accompanying drawings which are briefly described in the following paragraphs.

### BRIEF DESCRIPTION OF THE DRAWINGS

Figure 1 shows a block diagram of an exemplary and non-limiting embodiment of an adaptive optical system.
Figure 2 shows a flow diagram of an exemplary and non-limiting embodiment of a control method of an optical device which is controllable for emitting and/or reflecting and/or transmitting optical radiation.

### DETAILED DESCRIPTION

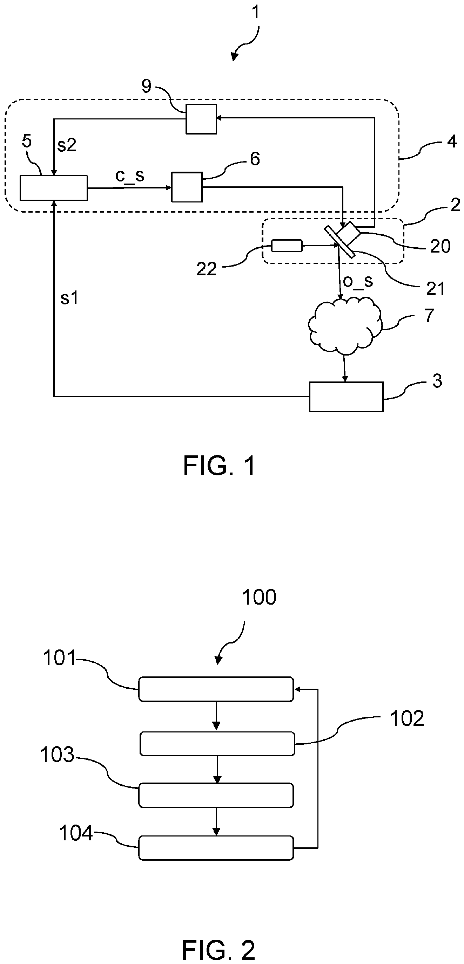

Figure 1 shows an exemplary and non-limiting embodiment of an adaptive optical system 1. The aforesaid adaptive optical system 1 may be applied in several fields, such as power lasers, optical communications in free space, LIDAR, remote detection systems. In particular, with regard to power lasers, the adaptive optical system 1 can be used to concentrate a high optical power on an object or target, for example to work or modify or destroy the object or target, with possible uses in both civil and military fields.

The depiction of the diagram of the adaptive optical system 1 of figure 1 is not to scale, thus it is possible to envisage that the parts forming it are arranged in a spatial concentration relationship or a distributed arrangement relationship. Furthermore, the adaptive optical system 1 can be arranged in whole or in part on a fixed platform or on a movable platform, for example on one or more fixed stations and/or on one or more land, naval, air or space vehicles.

The adaptive optical system 1 comprises at least one optical device 2 which is controllable for emitting and/or reflecting and/or transmitting an optical radiation ο_s having a wavefront. The aforesaid optical radiation ο_s is, for example, a laser ray or comprises a plurality of laser rays which form a relatively concentrated beam of laser rays. Said optical radiation o_s preferably has an overall optical power greater than 5 kW, or more preferably greater than 10 kW, for example equal to 20kW or 50 kW. However, possible embodiments are not excluded in which the optical radiation ο_s has a much lower power than those indicated above.

The optical device 2 may comprise a plurality of optical devices, for example a plurality of lasers, and/or a plurality of mirrors and/or a plurality of lenses. As will be explained below, the optical device 2 can also comprise electromechanical or electrooptical devices or systems or elements which together allow to emit and/or reflect and/or transmit an optical radiation o_s intended to be transmitted by propagation through the atmosphere 7.

The adaptive optical system 1 further comprises a distortion measurement module 3 adapted to measure, or estimate, a wavefront distortion of the optical radiation o_s to provide a first signal s1 representative of the measured or estimated distortion. The aforesaid first signal s1 is for example an electrical signal, but possible implementations in which the first signal s1 is a radio signal or an optical signal are not excluded.

In accordance with an advantageous and non-limiting embodiment, the distortion measurement module 3 comprises at least one Shack-Hartmann sensor. Sensors of this type are known and will therefore not be further described in greater detail. According to alternative embodiments, the distortion measurement module 3 comprises a pyramid sensor or a curvature sensor.

The distortion measurement module 3 is configured to directly receive the optical radiation o_s emitted by the optical device 2, or it is configured to receive an optical signal obtained therefrom or related thereto, for example an optical signal deriving from a reflection of the aforesaid optical radiation o_s or obtained by tapping a portion of the aforesaid optical radiation o_s or obtained by acquiring an image of the aforesaid optical radiation o_s by one or more imaging devices such as cameras, video cameras or thermal cameras. The distortion measurement module 3 can also measure the distortion of the wavefront of the optical radiation o_s also based on a signal independent of the optical radiation, for example based on an electromagnetic signal reflected or emitted by a remote object with respect to the optical device 2, such as a target, or based on image analysis of the remote object.

The adaptive optical system 1 further comprises a control system 4 adapted to control the optical device 2 in order to reduce or eliminate the distortion measured by the measurement module 3.

The control system 4 comprises a processing module 5 operatively connected to the measurement module 3 to receive in input the first signal s1 and output a control signal c_s. Furthermore, the optical device 2 is operatively connected to the processing module 5 to receive in input the control signal c_s.

According to an advantageous and non-limiting embodiment, the processing module 5 is or comprises an SoC, i.e., a so-called System on a Chip.

The control signal c_s supplied by the processing module 5 is a digital signal coded with a delta-sigma modulation. By virtue of this expedient, it is possible to obtain a significant reduction in overall dimensions and costs while ensuring a control accuracy comparable or even higher than that of the adaptive control systems of the background art. Preferably, the aforesaid control signal c_s is a one-bit digital signal having a frequency of the order of MHz or equal to 1 MHz or equal to about 1 MHz. Thereby, with a 1-bit digital control signal it is possible to obtain an equivalent resolution of 24 bits or higher.

In accordance with an embodiment, the optical device 2 comprises at least one actuator 20 and at least one optical component 21 which is configurable by the actuator 20 to vary at least one emission and/or reflection and/or transmission parameter of the optical component 21. The actuator 20 is configured to receive in input the control signal c_s to configure the optical component 21.

In accordance with an embodiment, the aforesaid optical device 2 comprises a plurality of optical devices. In this case, it can be envisaged that the optical device 2 comprises a plurality of actuators 20 and a plurality of optical components 21, in which each actuator 20 is preferably operatively associated with a respective optical component 21.

In the case in which the optical device 2 comprises a plurality of optical devices, it can be envisaged that the processing unit 5 outputs a plurality of control signals, each one dedicated to control a respective optical device 2.

In accordance with an embodiment, the aforesaid optical component 21 comprises at least one deformable and/or movable mirror. Such a deformable and/or movable mirror allows for example to vary the direction and/or focus of an optical radiation emitted by a laser source 22. In accordance with an embodiment, the optical component 21 comprises an array of deformable and/or movable mirrors, for example a two-dimensional array, for example a square, rectangular, hexagonal or circular array, each mirror of the array being associated with a respective optical source 22, for example each mirror of the array being associated with a respective laser source 22. Thus in this case, the resulting optical radiation o_s is a beam of laser rays which can, for example, be focused by controlling the array of deformable and/or movable mirrors.

For example, the actuator 20 is, or comprises, at least one electromechanical actuator, preferably a piezoelectric actuator, more preferably a two-axis piezoelectric actuator. If the optical component 21 comprises a deformable and/or movable mirror, the electromechanical actuator is operatively coupled to the mirror to deform it along one or more axes and/or tilt it along one or more axes and/or translate it along one or more axes.

In accordance with an advantageous embodiment, the control system 4 further comprises a signal amplifier 6 operatively interposed between the processing module 5 and the optical device 2 adapted and configured to receive in input the control signal c_s and output an amplified control signal. In this case, for example, the control signal c_s supplied by the processing unit 5 is a logic signal of a few volts (for example a logic signal 0V - 5V), while the signal amplifier 6 is configured to increase the amplitude of such a signal c_s, for example to make it of the order of tens of Volts, for example equal to 100 Volts, thus for example a signal with amplitude -50V, + 50V or a signal with amplitude 0V, + 100V. Thereby the necessary power is obtained to control the optical device 2, for example to control the actuator 20, which as already explained is for example a piezoelectric actuator. According to a particularly advantageous embodiment, the signal amplifier 6 comprises an H-bridge or a half-H bridge. Since an amplifier with an H-bridge or a half-H bridge comprises electronic switches (for example, MOSFETs) which must be controlled by control signals, it can be envisaged that it is the processing module 5 itself to supply the amplifier 6 with the control signals required for the operation thereof.

In accordance with the claimed invention, the processing unit 5 is adapted and configured to receive in input asecond signal s2 carrying status information of the optical device 2. The processing unit 5 is configured to produce the control signal c_s based on said first signal s1 and based on said second signal s2. Thereby, it is possible to implement a feedback control which, through the first signal s1, allows to reduce the deformation of the wavefront detected by the measurement module 3 and which meanwhile takes into account, through the second signal s2, the real status assumed by the optical device 2 following the control actions performed thereon based on the control signal c_s.

For example, the second signal s2 carries status information of the actuator 20. In this case, preferably such status information is or comprises position information of the actuator 20. Such status information can be provided for example by a system integrated in the actuator 20, for example by a position encoder, or by one or more sensors outside the actuator 20, for example by one or more position sensors.

According to a preferred embodiment, the control system 4 comprises an analog to digital converter 9 which, by acquiring status information from the optical device 2 by means of an analog signal, is configured to produce the second signal s2 as a digital signal. In accordance with an advantageous embodiment, the analog-digital converter 9 is a delta-sigma converter. According to the claimed invention, the second signal s2 is a signal coded with a delta-sigma modulation as well.

With reference to figure 2, the above description for the adaptive optical system 1 also extends to a control method 100 of an adaptive optical system 1, in which the adaptive optical system 1 comprises at least one optical device 2 which is controllable for emitting and/or reflecting and/or transmitting an optical radiation ο_s having a wavefront, the control method 100 comprising the steps of:
- emitting and/or reflecting and/or transmitting 101 through said at least one optical device 2 an optical radiation o_s having a wavefront;
- measuring a distortion 102 of the wavefront of the optical radiation to acquire data related to the distortion measurement;
- processing 103 the acquired data to obtain a control signal c_s of the optical device 2 to reduce or eliminate the measured distortion.

In the control method 100 the processing step 103 comprises an operation of coding said control signal c_s with a delta-sigma modulation.

Preferably, the control method 100 further comprises a step of amplifying 104 the control signal c_s by means of an H-bridge or a half-H bridge.

According to a particularly advantageous embodiment, the control method 100 further comprises a step of acquiring at least one image of said optical radiation o_s by means of one or more imaging devices such as cameras, video cameras or thermal cameras and in which the step of measuring a distortion 102 is performed by analyzing said at least one image.

Further features of the control method 100 can be derived directly from the above description for the adaptive optical system and for this reason they will not be described again.

From the above, it is apparent that an adaptive optical system 1 of the type described above allows to fully achieve the preset objects in terms of overcoming the drawbacks of the background art. In fact, an adaptive optical system 1 of the type described above can allow to obtain a considerable cost reduction with respect to the known systems, equal to at least 25%. Furthermore, the aforesaid system can allow to obtain a considerable reduction in size with respect to the known systems, equal to at least 10%.

According to a non-limiting embodiment, the aforesaid adaptive optical system 1 can be comprised or integrated in a weapon system, for example in the case in which the optical device 2 comprises one or more power lasers. With respect to what has been described above, the weapon system can include for example means for detecting and aiming a target, for example a radar system, and a shooting control system.

Without prejudice to the invention, the embodiments and the constructional details may be broadly varied with respect to the above description , within the scope of the invention as defined in the appended claims.

## Claims

1. An adaptive optical system (1) comprising:
- at least one optical device (2) which is controllable for emitting and/or reflecting and/or transmitting an optical radiation (o_s) having a wavefront;
- a distortion measurement module (3) adapted to measure a distortion of the wavefront of the optical radiation (o_s) to provide a first signal (s1) representative of the measured distortion;
- a control system (4) adapted to control the optical device (2) in order to reduce or eliminate the measured distortion;
wherein:
- the control system (4) comprises a processing module (5) operatively connected to the measurement module (3) to receive in input the first signal (s1) and output a control signal (c_s);
- wherein the optical device (2) is operatively connected to the processing module (5) to receive in input the control signal (c_s);
- the control signal (c_s) is a digital signal coded with delta-sigma modulation;
**characterized in that**:
the processing unit (5) is configured to receive in input a second signal (s2) encoded with a delta-sigma modulation and carrying status information of the optical device (2) and wherein the processing unit (5) is configured to produce said control signal (c_s) based on said first signal (s1) and based on said second signal (s2).

2. An adaptive optical system (1) according to claim 1, wherein the optical device (2) comprises at least one actuator (20) and at least one optical component (21) which is configurable by the actuator (20) to vary at least one emission and/or reflection and/or transmission parameter of the optical component (21) and wherein the actuator (20) is configured to receive in input the control signal (c_s) to configure the optical component (21).

3. An adaptive optical system (1) according to claim 2, wherein said actuator (20) is, or comprises, at least one electromechanical actuator and wherein said at least one electromechanical actuator is a piezoelectric actuator.

4. An adaptive optical system (1) according to claim 2 or 3, wherein said optical component (21) is, or comprises, at least one deformable and/or movable mirror.

5. An adaptive optical system (1) according to any one of the preceding claims, wherein the control system (4) further comprises a signal amplifier (6) operatively interposed between the processing module (5) and the optical device (2) to receive in input said control signal (c_s) and output an amplified control signal.

6. An adaptive optical system (2) according to claim 5, wherein the signal amplifier (6) comprises an H-bridge or a half-H bridge.

7. An adaptive optical system (1) according to any one of the preceding claims, wherein the distortion measurement module (3) comprises at least one Shack-Hartman sensor.

8. An adaptive optical system (1) according to claim 2, wherein said second signal (s2) carries status information of the actuator (20).

9. An adaptive optical system (1) according to claim 8, wherein said status information is or comprises position information of said actuator (20).

10. An adaptive optical system according to any one of the preceding claims, wherein said processing module (5) is an SOC - System On Chip.

11. A weapon system comprising an adaptive optical system (1) according to any one of the preceding claims, wherein said optical device (2) comprises one or more high power lasers (22).

12. A method (100) of controlling an adaptive optical system (1), wherein the adaptive optical system (1) comprises at least one optical device (2) which is controllable for emitting and/or reflecting and/or transmitting an optical radiation (o_s) having a wavefront, the control method (100) comprising the steps of:
- emitting and/or reflecting and/or transmitting (101) through said at least one optical device (2) an optical radiation (o_s) having a wavefront;
- measuring a distortion (102) of the wavefront of the optical radiation (o_s) to acquire data related to the distortion measurement;
- processing the acquired data (103) to obtain a control signal (c_s) for the optical device (2) to reduce or eliminate the measured distortion;
wherein the processing step (103) comprises an operation of coding the control signal (c_s) with a delta-sigma modulation;
**characterized in that** in said processing step (103) said control signal (c_s) is also obtained based on a signal (s2) codified with a delta-sigma modulation and carrying status information of said optical device (20).

13. A control method (100) according to claim 12, further comprising a step of amplifying (104) the control signal (c_s) by means of an H-bridge or a half-H bridge.

14. A control method according to claims 12 or 13, further comprising a step of acquiring at least one image of the optical radiation (o_s) by means of one or more imaging devices such as cameras, video cameras or thermal cameras and wherein the step of measuring a distortion (102) is performed by analyzing said at least one image.

## Patentansprüche

1. Adaptives optisches System (1), umfassend:
- mindestens eine optische Vorrichtung (2), die zum Emittieren und/oder Reflektieren und/oder Übertragen einer optischen Strahlung (o_s), die eine Wellenfront aufweist, steuerbar ist;
- ein Verzerrungsmessmodul (3), das geeignet ist, eine Verzerrung der Wellenfront der optischen Strahlung (o_s) zu messen, um ein erstes Signal (s1) bereitzustellen, das für die gemessene Verzerrung repräsentativ ist;
- ein Steuersystem (4), das geeignet ist, die optische Vorrichtung (2) zu steuern, um die gemessene Verzerrung zu verringern oder zu beseitigen;
wobei:
- das Steuersystem (4) ein Verarbeitungsmodul (5) umfasst, das betriebsfähig mit dem Messmodul (3) verbunden ist, um am Eingang das erste Signal (s1) zu empfangen und ein Steuersignal (c_s) auszugeben;
- wobei die optische Vorrichtung (2) betriebsfähig mit dem Verarbeitungsmodul (5) verbunden ist, um am Eingang das Steuersignal (c_s) zu empfangen;
- das Steuersignal (c_s) ein mit Delta-Sigma-Modulation codiertes digitales Signal ist;
**dadurch gekennzeichnet, dass**:
die Verarbeitungseinheit (5) dazu konfiguriert ist, am Eingang ein zweites Signal (s2) zu empfangen, das mit einer Delta-Sigma-Modulation codiert ist und Statusinformationen der optischen Vorrichtung (2) trägt, und wobei die Verarbeitungseinheit (5) dazu konfiguriert ist,
das Steuersignal (c_s) basierend auf dem ersten Signal (s1) und basierend auf dem zweiten Signal (s2) zu erzeugen.

2. Adaptives optisches System (1) nach Anspruch 1, wobei die optische Vorrichtung (2) mindestens einen Aktor (20) und mindestens eine optische Komponente (21) umfasst, die durch den Aktor (20) konfigurierbar ist, um mindestens einen Emissions- und/oder Reflexions- und/oder Übertragungsparameter der optischen Komponente (21) zu variieren, und wobei der Aktor (20) dazu konfiguriert ist, am Eingang das Steuersignal (c_s) zu empfangen, um die optische Komponente (21) zu konfigurieren.

3. Adaptives optisches System (1) nach Anspruch 2, wobei der Aktor (20) mindestens ein elektromechanischer Aktor ist oder einen solchen umfasst und wobei der mindestens eine elektromechanische Aktor ein piezoelektrischer Aktor ist.

4. Adaptives optisches System (1) nach Anspruch 2 oder 3, wobei die optische Komponente (21) mindestens ein verformbarer und/oder beweglicher Spiegel ist oder einen solchen umfasst.

5. Adaptives optisches System (1) nach einem der vorhergehenden Ansprüche, wobei das Steuersystem (4) ferner einen Signalverstärker (6) umfasst, der betriebsfähig zwischen dem Verarbeitungsmodul (5) und der optischen Vorrichtung (2) angeordnet ist, um am Eingang das Steuersignal (c_s) zu empfangen und ein verstärktes Steuersignal auszugeben.

6. Adaptives optisches System (2) nach Anspruch 5, wobei der Signalverstärker (6) eine H-Brücke oder eine H-Halbbrücke umfasst.

7. Adaptives optisches System (1) nach einem der vorhergehenden Ansprüche, wobei das Verzerrungsmessmodul (3) mindestens einen Shack-Hartmann-Sensor umfasst.

8. Adaptives optisches System (1) nach Anspruch 2, wobei das zweite Signal (s2) Statusinformationen des Aktors (20) trägt.

9. Adaptives optisches System (1) nach Anspruch 8, wobei die Statusinformationen Positionsinformationen des Aktors (20) sind oder umfassen.

10. Adaptives optisches System nach einem der vorhergehenden Ansprüche, wobei das Verarbeitungsmodul (5) ein SOC (System On Chip) ist.

11. Waffensystem, umfassend ein adaptives optisches System (1) nach einem der vorhergehenden Ansprüche, wobei die optische Vorrichtung (2) einen oder mehrere Hochleistungslaser (22) umfasst.

12. Verfahren (100) zum Steuern eines adaptiven optischen Systems (1), wobei das adaptive optische System (1) mindestens eine optische Vorrichtung (2), die zum Emittieren und/oder Reflektieren und/oder Übertragen einer optischen Strahlung (o_s), die eine Wellenfront aufweist, steuerbar ist, wobei das Steuerverfahren (100) die folgenden Schritte umfasst:
- Emittieren und/oder Reflektieren und/oder Übertragen (101) einer optischen Strahlung (o_s), die eine Wellenfront aufweist, durch die mindestens eine optische Vorrichtung (2);
- Messen einer Verzerrung (102) der Wellenfront der optischen Strahlung (o_s), um Daten zu erfassen, die sich auf die Verzerrungsmessung beziehen;
- Verarbeiten der erfassten Daten (103), um ein Steuersignal (c_s) für die optische Vorrichtung (2) zu erhalten, um die gemessene Verzerrung zu reduzieren oder zu beseitigen;
wobei der Verarbeitungsschritt (103) einen Vorgang des Codierens des Steuersignals (c_s) mit einer Delta-Sigma-Modulation umfasst;
**dadurch gekennzeichnet, dass** in dem Verarbeitungsschritt (103) das Steuersignal (c_s) auch auf der Grundlage eines Signals (s2) erhalten wird, das mit einer Delta-Sigma-Modulation codiert ist und Statusinformationen der optischen Vorrichtung (20) trägt.

13. Steuerverfahren (100) nach Anspruch 12, ferner umfassend einen Schritt des Verstärkens (104) des Steuersignals (c_s) mittels einer H-Brücke oder einer H-Halbbrücke.

14. Steuerverfahren nach den Ansprüchen 12 oder 13, ferner umfassend einen Schritt des Erfassens von mindestens einem Bild der optischen Strahlung (o_s) mittels einer oder mehreren bildgebenden Vorrichtungen wie etwa Kameras, Videokameras oder Wärmekameras, und wobei der Schritt des Messens einer Verzerrung (102) durch Analysieren des mindestens einen Bildes durchgeführt wird.

## Revendications

1. Système d'optique adaptative (1) comprenant :
- au moins un dispositif optique (2) qui peut être commandé pour émettre et/ou réfléchir et/ou transmettre un rayonnement optique (o_s) présentant un front d'onde ;
- un module de mesure (3) de distorsion conçu pour mesurer une distorsion du front d'onde du rayonnement optique (o_s) pour fournir un premier signal (s1) représentatif de la distorsion mesurée ;
- un système de commande (4) conçu pour commander le dispositif optique (2) afin de réduire ou d'éliminer la distorsion mesurée ;
dans lequel :
- le système de commande (4) comprend un module de traitement (5) connecté fonctionnellement au module de mesure (3) pour recevoir en entrée le premier signal (s1) et délivrer un signal de commande (c_s) ;
- le dispositif optique (2) étant connecté fonctionnellement au module de traitement (5) pour recevoir en entrée le signal de commande (c_s) ;
- le signal de commande (c_s) étant un signal numérique codé avec une modulation delta-sigma ;
**caractérisé en ce que** :
l'unité de traitement (5) est conçue pour recevoir en entrée un second signal (s2) codé avec une modulation delta-sigma et contenant des informations d'état du dispositif optique (2) et l'unité de traitement (5) étant conçue pour produire ledit signal de commande (c_s) sur la base dudit premier signal (s1) et sur la base dudit second signal (s2).

2. Système d'optique adaptative (1) selon la revendication 1, dans lequel le dispositif optique (2) comprend au moins un actionneur (20) et au moins un composant optique (21) qui est configurable par l'actionneur (20) pour faire varier au moins un paramètre d'émission et/ou de réflexion et/ou de transmission du composant optique (21) et dans lequel l'actionneur (20) est conçu pour recevoir en entrée le signal de commande (c_s) pour configurer le composant optique (21).

3. Système d'optique adaptative (1) selon la revendication 2, dans lequel ledit actionneur (20) est, ou comprend, au moins un actionneur électromécanique et dans lequel ledit au moins un actionneur électromécanique est un actionneur piézoélectrique.

4. Système d'optique adaptative (1) selon la revendication 2 ou 3, dans lequel ledit composant optique (21) est, ou comprend, au moins un miroir déformable et/ou mobile.

5. Système d'optique adaptative (1) selon l'une quelconque des revendications précédentes, dans lequel le système de commande (4) comprend en outre un amplificateur de signal (6) interposé fonctionnellement entre le module de traitement (5) et le dispositif optique (2) pour recevoir en entrée ledit signal de commande (c_s) et délivrer un signal de commande amplifié.

6. Système d'optique adaptative (2) selon la revendication 5, dans lequel l'amplificateur de signal (6) comprend un pont en H ou un demi-pont en H.

7. Système d'optique adaptative (1) selon l'une quelconque des revendications précédentes, dans lequel le module de mesure (3) de distorsion comprend au moins un capteur Shack-Hartman.

8. Système d'optique adaptative (1) selon la revendication 2, dans lequel ledit second signal (s2) contient des informations d'état de l'actionneur (20).

9. Système d'optique adaptative (1) selon la revendication 8, dans lequel lesdites informations d'état sont ou comprennent des informations de position dudit actionneur (20).

10. Système d'optique adaptative selon l'une quelconque des revendications précédentes, dans lequel ledit module de traitement (5) est un SOC - System On Chip (système sur puce).

11. Système d'arme comprenant un système d'optique adaptative (1) selon l'une quelconque des revendications précédentes, dans lequel ledit dispositif optique (2) comprend un ou plusieurs lasers haute puissance (22).

12. Procédé (100) de commande d'un système d'optique adaptative (1), dans lequel le système d'optique adaptative (1) comprend au moins un dispositif optique (2) qui peut être commandé pour émettre et/ou réfléchir et/ou transmettre un rayonnement optique (o_s) présentant un front d'onde, le procédé de commande (100) comprenant les étapes consistant à :
- émettre et/ou réfléchir et/ou transmettre (101) par ledit au moins un dispositif optique (2) un rayonnement optique (o_s) présentant un front d'onde ;
- mesurer une distorsion (102) du front d'onde du rayonnement optique (o_s) pour acquérir des données concernant la mesure de distorsion ;
- traiter les données acquises (103) pour obtenir un signal de commande (c_s) pour le dispositif optique (2) afin de réduire ou d'éliminer la distorsion mesurée ;
dans lequel l'étape de traitement (103) comprend une opération de codage du signal de commande (c_s) avec une modulation delta-sigma ;
**caractérisé en ce que**, dans ladite étape de traitement (103), ledit signal de commande (c_s) est également obtenu sur la base d'un signal (s2) codifié avec une modulation delta-sigma et contenant des informations d'état dudit dispositif optique (20).

13. Procédé de commande (100) selon la revendication 12, comprenant en outre une étape d'amplification (104) du signal de commande (c_s) au moyen d'un pont en H ou d'un demi-pont en H.

14. Procédé de commande selon les revendications 12 ou 13, comprenant en outre une étape d'acquisition d'au moins une image du rayonnement optique (o_s) au moyen d'un ou de plusieurs dispositifs de formation d'images tels que des appareils photo, des caméras vidéo ou des caméras thermiques et dans lequel l'étape de mesure d'une distorsion (102) est réalisée en analysant ladite au moins une image.
